# EUROPEAN PATENT APPLICATION

(11) **EP 4 738 237 A1**
(43) Date of publication of application: **06.05.2026**
(21) Application number: 24831878.4
(22) Date of filing: 21.06.2024
(51) Int. Cl.: G06T 1/00

(54) **INSPECTION SYSTEM, INSPECTION METHOD, AND INSPECTION PROGRAM**

(30) Priority: 30.06.2023 JP 2023108579
(71) Applicant: Sony Interactive Entertainment Inc., Tokyo 108-0075 (JP)
(72) Inventor: KAWAMATA, Wataru, Tokyo 108-0075 (JP); YOKOTA, Kenichiro, Tokyo 108-0075 (JP); AMADA, Takashi, Tokyo 108-0075 (JP); IKENOUE, Shoichi, Tokyo 108-0075 (JP); YASUE, Nobuyuki, Tokyo 108-0075 (JP); MURAMOTO, Junichi, Tokyo 108-0075 (JP); WU, Jung-Hsuan, Tokyo 108-0075 (JP)
(74) Representative: Fish & Richardson P.C.
(86) International application number: PCT/JP2024/022659
(87) International publication number: WO 2025/005017

(57) **Abstract**

Provided are an inspection system, an inspection method, and an inspection program that can easily determine whether information included in each frame of an original low-quality moving image is accurate. A game program inspection system including a processor, a memory that stores instructions to be executed by the processor and a machine learning model trained using a plurality of training data sets, and a display, wherein the memory stores first to Nth (N is a natural number greater than or equal to 2) input frames each having a predetermined number of input pixels, along with attached information for each of the input frames, the processor edits nth (n = 2, 3, ..., N) attached information stored in the memory according to user instructions, the machine learning model outputs an nth estimated frame having a number of estimated pixels greater than or equal to the number of input pixels, based on first to n-1th input frames and the attached information, and an nth input frame and edited attached information, and the display displays the nth estimated frame.

## Description

### [Technical Field]

The present disclosure relates to an inspection system, an inspection method, and an inspection program.

### [Background Art]

Conventionally, techniques for using a machine learning model to estimate a high quality still image based on a low quality still image (super-resolution) is known (see Non-Patent Literature 1 below).

### [Citation List]

### [Non-Patent Literature]

[Non-Patent Document 1] Chao Dong, Chen Change Loy, Kaiming He, Xiaoou Tang. Learning a Deep Convolutional Network for Image Super-Resolution, in Proceedings of European Conference on Computer Vision (ECCV), 2014

### [Summary of Invention]

### [Technical Problem]

In super-resolution of moving images, it is believed that moving images of higher image quality can be estimated by taking into consideration not only information about each frame to be processed but also information about a past frame of that frame. On the other hand, in an image processing system that estimates an image taking into account information about a past frame when estimating high-quality moving images, it is difficult to determine whether the information contained in each frame input to the system is accurate for each frame to be input into the system.

An object of the present disclosure is to provide an inspection system, inspection method, and inspection program capable of easily determining whether the information contained in each frame of the original low-quality moving images is accurate in an image processing technique that uses information from a past frame to estimate high-quality moving images based on low-quality moving images.

### [Solution to Problem]

A game program inspection system of the present disclosure is a game program inspection system including a processor, a memory that stores instructions to be executed by the processor and a machine learning model trained using a plurality of training data sets, and a display, wherein the memory stores first to Nth (N is a natural number greater than or equal to 2) input frames each having a predetermined number of input pixels, along with attached information for each of the input frames, the processor edits nth (n = 2, 3, ..., N) attached information stored in the memory according to user instructions, the machine learning model outputs an nth estimated frame having a number of estimated pixels greater than or equal to the number of input pixels, based on first to n-1th input frames and the attached information, and an nth input frame and edited attached information, and the display displays the nth estimated frame.

### [Brief Description of Drawings]

[FIG. 1] A diagram illustrating one example of a hardware configuration of an image processing system and an inspection system.
[FIG. 2] A diagram illustrating an overview of the image processing system.
[FIG. 3] A diagram schematically illustrating processing in the image processing system.
[FIG. 4] A functional block diagram illustrating one example of functions realized by the image processing system.
[FIG. 5] A diagram describing processing at a renderer.
[FIG. 6] A diagram describing processing at an intermediate frame acquisition.
[FIG. 7] A flowchart illustrating one example of a processing flow executed at the image processing system.
[FIG. 8] A diagram describing processing executed at the inspection system.
[FIG. 9] A diagram describing the processing executed at the inspection system.
[FIG. 10] A diagram illustrating information stored by a rendering information memory for each frame.

### [Description of Embodiments]

One example of an embodiment of an image processing system according to the present disclosure will be described below with reference to the drawings.

### [1. Hardware Configuration of Image Processing System]

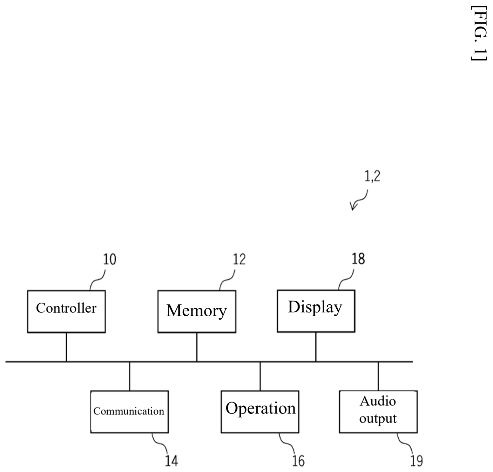

FIG. 1 is a diagram illustrating one example of a hardware configuration of an image processing system 1 and inspection system 2. The image processing system 1 is, for example, a computer such as a game console (game device). The inspection system 2 is, for example, a computer in which a program for executing a game program is installed. As illustrated in FIG. 1, the image processing system 1 and inspection system 2 includes a controller 10, a memory 12, a communication 14, an operation 16, a display 18, and an audio output 19.

The controller 10, for example, includes a program control device such as a CPU that operates according to a program installed in the image processing system 1 and inspection system 2. The controller 10 also includes a GPU (Graphics Processing Unit) that renders images in a frame buffer based on graphics commands and data supplied from the CPU.

The memory 12 includes, for example, a main memory such as ROM or RAM, and an auxiliary memory such as an HDD or an SSD. The memory 12 stores programs such as those executed by the controller 10. The memory 12 stores instructions to be executed by the processor and a machine learning model trained using a plurality of training data sets. For instance, the memory 12 stores, for example, a game program (game software) in addition to a program for implementing various functions of the image processing system 1, as described below. The memory 12 also has a frame buffer area reserved for images rendered by the GPU.

The communication 14 is a communication interface such as an Ethernet (registered trademark) module or a wireless LAN module.

The operation 16 is a user interface such as a keyboard, mouse, or game console controller, and receives operation inputs from a user and outputs signals indicating the details of the inputs to the controller 10.

The display 18 is a display device such as a liquid crystal display or an organic EL display, and displays various images according to instructions from the controller 10.

The audio output 19 is, for example, a speaker or the like, and outputs audio represented by audio data generated by the image processing system 1.

In addition to the devices described above, the image processing system 1 may also include an optical disc drive that reads optical discs such as DVD-ROM and Blu-ray (registered trademark) disc, a USB (Universal Serial Bus) port, and the like.

### [2. Overview of Image Processing System]

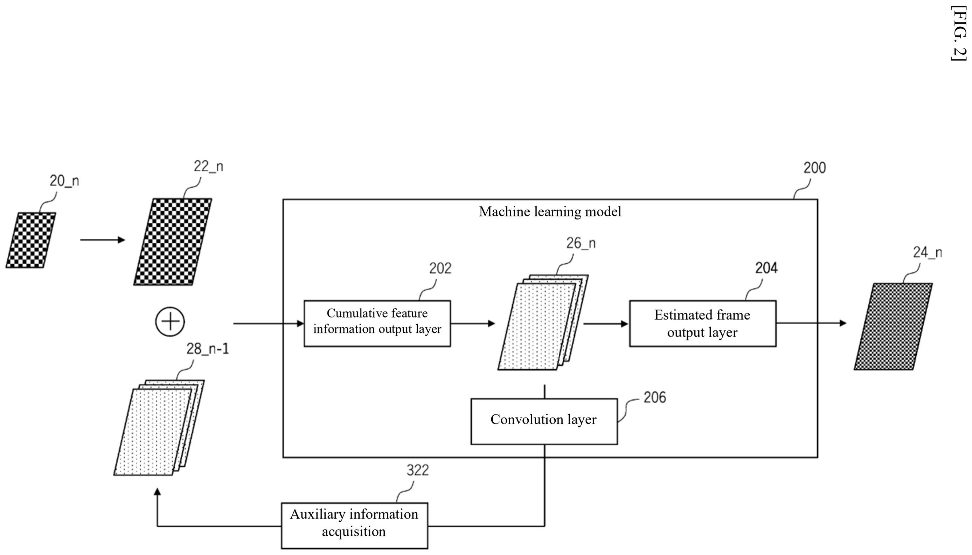

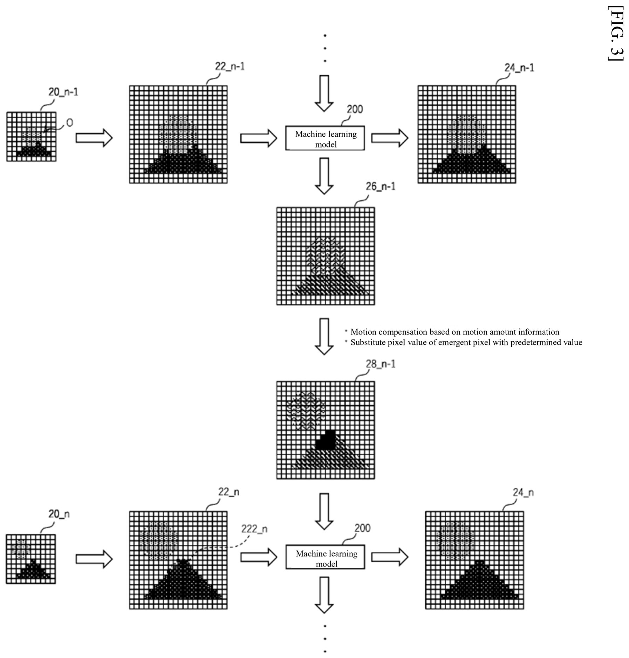

FIG. 2 is a diagram illustrating an overview of the image processing system 1. FIG. 3 is a diagram schematically illustrating processing at the image processing system 1. In the present embodiment, the image processing system 1 is used to improve the image quality of gameplay moving images in a game, as an example. The gameplay moving image is a moving image generated in response to a game program executed by the controller 10, user input received by the operation 16, and the like and is constituted of a plurality of still images (frames) that are chronological data. The processing performed at the image processing system 1 is substantially as follows.

### (1) Generation of input frame

First, the image processing system 1 generates, by executing rendering of three-dimensional data representing one or more game objects as seen from a predetermined viewpoint, an image (input frame) rendering the game objects. This input frame is an image having a predetermined number of pixels (number of input pixels) and a predetermined image quality (input image quality) (see FIG. 3). An input frame 20 is constituted by color information. The input frame is generated at predetermined time intervals. The number of pixels in the input frame is, for example, 1920×1080 (1080p). Each generated input frame is not displayed directly on the display 18, but is temporarily stored in the memory 12 and is used in subsequent processing. In the following description, processing for an nth (nth) input frame 20_n will be illustrated as a primary example, but similar processing is also executed for other input frames (that is, n = 2, 3, ..., N).

### (2) Acquisition of intermediate frame

The image processing system 1 acquires a frame (intermediate frame) 22_n having a number of pixels (number of intermediate pixels) greater than the number of input pixels, based on the acquired input frame 20_n. The number of intermediate pixels is, for example, 3840×2160 (4K). Specifically, the intermediate frame 22_n is generated by executing scaling and interpolation processing on the input frame 20_n (see FIG. 3).

It should be noted that although the intermediate frame 22_n has more pixels than the input frame 20_n, image quality thereof is not necessarily sufficiently improved. That is, the image quality of a frame does not simply refer to the number of pixels (high resolution). The image quality of a frame may be evaluated based on, for example, a SN ratio value, a spatial frequency reproducibility value, a temporal stability value (fewer artifacts and flicker when a plurality of frames are displayed consecutively), and the like, or a combination of these, when compared to a reference frame.

### (3) Acquisition of estimated frame

The image processing system 1 inputs the intermediate frame 22_n to a machine learning model 200 and acquires an estimated frame 24_n. The estimated frame 24_n is an image having the same number of pixels (number of estimated pixels) as the number of intermediate pixels and an image quality (estimated image quality) that is equal to or higher than the input image quality (see FIG. 3).

Here, in addition to the intermediate frame 22_n, n-1th auxiliary information 28_n-1 is input to the machine learning model 200 (see FIG. 2 and FIG. 3). The auxiliary information 28_n-1 is information based on n-1th cumulative feature information 26_n-1 that indicates features of first to n-1th intermediate frames 22. The cumulative feature information 26 and the auxiliary information 28 will be described in detail below.

The machine learning model 200 is a model trained using a plurality of training data sets, each of which includes a training intermediate frame having a number of intermediate pixels generated based on a training input frame having a number of input pixels and an input image quality, and a training estimated frame having a number of estimated pixels and an estimated image quality. The details of the machine learning model 200 will be described in detail below.

### (4) Acquisition of cumulative feature information

The machine learning model 200 has a cumulative feature information output layer 202 that receives the intermediate frame 22_n and auxiliary information 28_n-1 and outputs nth cumulative feature information 26_n that indicates features of the first to nth input frames 22 (see FIG. 2). The image processing system 1 acquires the nth cumulative feature information 26_n.

The acquired nth cumulative feature information 26_n is input to an estimated frame output layer 204, and the nth estimated frame 24_n is output from the estimated frame output layer 204 (see FIG. 2). The acquired nth cumulative feature information 26_n is also stored in the memory 12 and is used to estimate an estimated frame 24_n+1 corresponding to a next input frame (the n+1th input frame) 20_n+1.

### (5) Acquisition of auxiliary information

As described above, the n-1th cumulative feature information 26_ n-1 is information indicating the features of the first to n-1th intermediate frames 22 (and consequently the first to n-1th input frames 20). In this way, by using the cumulative feature information 26_n-1, which is the cumulative information of past input frames 20, to estimate the nth estimated frame 24_n, the amount of information available for estimation is increased, making it possible to acquire a high image quality estimated frame 24_n.

However, when there is motion or the like in the displayed game object between the n-1th input frame 20_n-1 and the nth input frame 20_n, when the nth intermediate frame 22_n and the cumulative feature information 26_n-1 are input directly to the machine learning model 200, a phenomenon (so-called ghost phenomenon) may occur in which an afterimage of the game object that was displayed in the n-1th input frame 20_n-1 is displayed.

Therefore, the image processing system 1 acquires the n-1th auxiliary information 28_n-1 by applying various corrections described below to the cumulative feature information 26_n-1 based on attached information acquired during rendering (motion vectors, depth buffer, and the like) (see FIG. 2 and FIG. 3). As described above, the acquired n-1th auxiliary information 28_n-1 is input to the machine learning model 200 together with the nth intermediate frame 22_n and is used to estimate the nth estimated frame 24_n.

As described above, according to the image processing system 1 of the present embodiment, an estimated frame 24 is estimated using auxiliary information 28 that accumulates past information in addition to the intermediate frame 22 that corresponds to the current input frame 20. This increases the amount of information available for estimation, making it possible to acquire a high image quality estimated frame 24_n. The image processing system 1 will be described in detail below.

### [3. Functions Implemented by Image Processing System]

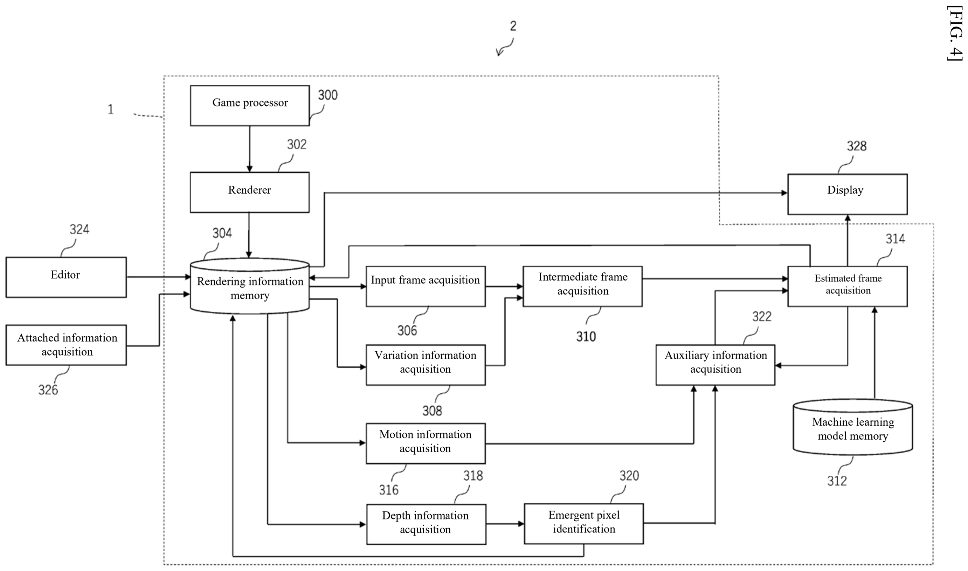

FIG. 4 is a functional block diagram illustrating one example of functions implemented by the image processing system 1 and inspection system 2. As illustrated in FIG. 4, in the image processing system 1 implements game processor 300, renderer 302, rendering information memory 304, input frame acquisition 306, variation information acquisition 308, intermediate frame acquisition 310, machine learning model memory 312, estimated frame acquisition 314, motion information acquisition 316, depth information acquisition 318, emergent pixel identification 320, and auxiliary information acquisition 322. In the inspection system 2, editor 324, attached information processor 326, and a display 328 are realized in addition to each of the image processing system 1. The game processor 300, renderer 302, input frame acquisition 306, variation information acquisition 308, intermediate frame acquisition 310, estimated frame acquisition 314, motion information acquisition 316, depth information acquisition 318, emergent pixel identification 320, and auxiliary information acquisition 322, editing 324, and attached information processor 326 mainly implemented by the controller 10. The rendering information memory 304 and the machine learning model memory 312 are mainly implemented by the memory 12. Function as the display 328 is mainly implemented by the display 18 which is a device. The game processor 300, renderer 302, and rendering information memory 304 are functions provided by game software.

### [Game Processor]

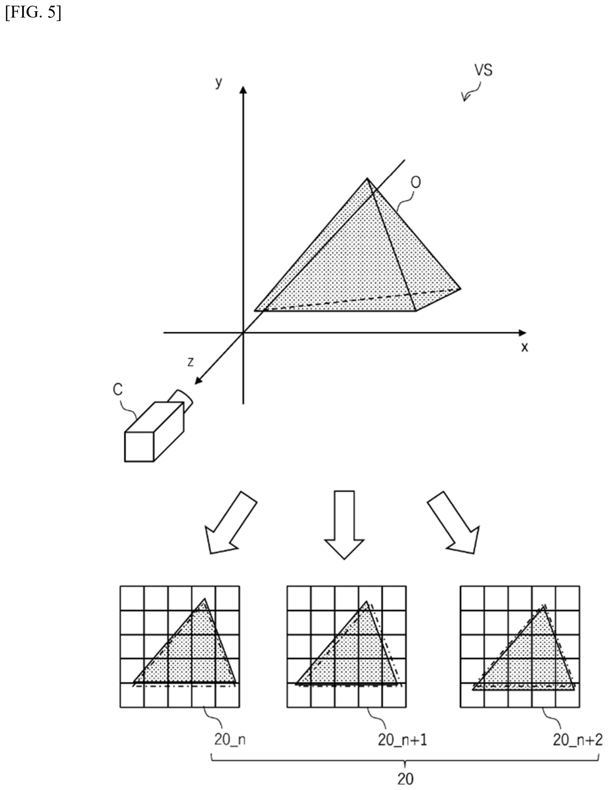

The game processor 300 executes various processes related to a game. The game processor 300 executes processes such as placing a game object O in a virtual three-dimensional space VS, manipulating or moving the game object O, and changing a viewpoint C from which the virtual three-dimensional space VS is viewed, in accordance with, for example, a game program executed by the controller 10 and user input received by the operation 16 (see FIG. 5). The game object O is constituted of primitives such as polygons represented by three-dimensional data. The three-dimensional data includes geometric information indicating positions of vertices, etc., topological information indicating how the vertices are connected, and attribute information such as color.

### [Renderer]

FIG. 5 is a diagram describing processing of the renderer 302. The renderer 302 generates first to Nth (N is a natural number greater than or equal to 2) input frames 20 by executing rendering (rendering process) of three-dimensional data representing one or more game objects O viewed from a predetermined viewpoint C. The renderer 302 executes rendering based on results of various processes executed by the game processor 300. Specifically, the renderer 302 executes vertex processing (vertex shading) and pixel processing (pixel shading) based on three-dimensional data representing the game object O disposed in the virtual three-dimensional space VS. Vertex processing includes a coordinate transformation process (perspective projection) from a view coordinate system to a screen coordinate system, and a numerical value related to variation in the viewpoint C is added to the perspective projection matrix (camera matrix) used in the coordinate transformation process, as described below. The renderer 302 may execute rendering based on light source information, depth information (depth buffer), texture information, normal information, and the like. In addition to the above processes, the renderer 302 may also execute processes to apply effects such as depth of field (DoF) and motion blur. The processing of the renderer 302 may be set as appropriate by game software developer or the like. Here, a game software developer or the like may adjust a texture MIP according to the number of estimated pixels of the estimated frame 24, and the like. This makes it possible to suppress generation of noise such as Moiré patterns in the estimated frame 24.

Here, the renderer 302 generates each of the input frames 20 by executing rendering so that the viewpoint C varies for each of the input frames 20. Here, even when the game processor 300 fixes the viewpoint C at a predetermined position, the renderer 302 varies the viewpoint C for each of the input frames 20. As a result, as illustrated in FIG. 5, the position of the displayed game object O varies in each of the input frames 20_n, 20_n+1, and 20_n+2. In other words, the renderer 302 applies jitter (jitter) when generating each of the input frames 20. Specifically, the renderer 302 varies the viewpoint C for each of the input frames 20 by adding a numerical value corresponding to a size less than one pixel, which differs for each of the input frames 20, to the perspective projection matrix. The renderer 302 varies the viewpoint C for each of the input frames 20 according to a predetermined rule. For example, a Halton sequence may be used as such a rule.

### [Rendering Information Memory]

The rendering information memory 304 stores information necessary for the rendering process in the renderer 302 and information obtained as a result of the rendering process. For example, the rendering information memory 304 stores first to Nth (N is a natural number greater than or equal to 2) input frames 20 having a predetermined number of input pixels. The rendering information memory 304 also stores the input frames 20 together with the attached information for each of the input frames 20. The attached information includes variation information, motion information, and depth information. The details of the attached information will be described in detail later. The rendering information memory 304 also stores information (emergent pixel information and auxiliary information 28) generated based on the attached information. Additionally, the rendering information memory 304 may store parameters used in coordinate transformation, light source information, texture information, normal information, and the like.

### [Input Frame Acquisition]

The input frame acquisition 306 acquires each of the first to Nth input frames 20. Specifically, the input frame acquisition 306 acquires the first to Nth input frames 20 stored in the rendering information memory 304.

### [Variation Information Acquisition]

The variation information acquisition 308 acquires variation information. The variation information acquisition 308 acquires the variation information stored in the rendering information memory 304. Specifically, the variation information is information indicating an amount of variation of the viewpoint C between before the variation and after the variation. The information indicating the amount of variation may also be considered a variation vector indicating a direction and distance of the variation. For example, as the Halton sequence described above contains information indicating the amount of variation of the viewpoint C, this information may be used as the variation information.

### [Intermediate Frame Acquisition]

The intermediate frame acquisition 310 acquires the first to Nth intermediate frames 22 based on each of the input frames 20 by generating an intermediate frame 22 that corresponds to the input frame 20 and has a number of intermediate pixels equal to or greater than the number of input pixels. In the present embodiment, each intermediate frame 22 has a number of intermediate pixels that is greater than the number of input pixels. That is, in the present embodiment, each intermediate frame 22 is a scaled image of the input frame 20 corresponding to the intermediate frame 22.

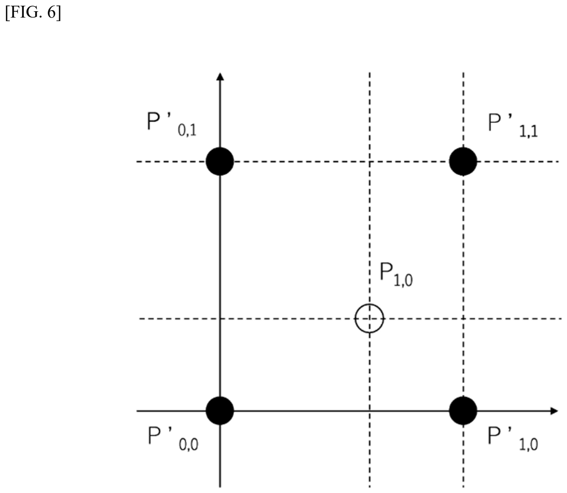

Specifically, the intermediate frame acquisition 310 finds, by interpolation, pixel values at positions in the input frame 20 corresponding to each pixel before the variation based on the variation information and each pixel of each of the input frames 20, and generates each intermediate frame 22. FIG. 6 is a diagram describing processing in the intermediate frame acquisition 310. FIG. 6 illustrates an example in which the nth intermediate frame 22_n is found. For example, as illustrated in FIG. 6, when defining a pixel center of a pixel in the intermediate frame 22_n to be acquired as P1,0, the intermediate frame acquisition 310 finds a pixel value of P1,0 by bilinear (bilinear) interpolation based on the coordinates and pixel values of the respective pixel centers P'0,0, P'1,0, P'0,1, and P'1,1 of the four pixels closest to P1,0 in the input frame 20_n. Here, P'1,0 is located at a position shifted from P1,0 by the amount of variation indicated by the variation information. The pixel values of the pixels newly generated by the scaling process are found in the same manner. Various known techniques such as bicubic (bicubic) interpolation and Lanczos interpolation may be used as interpolation methods in addition to bilinear interpolation.

When rendering is executed so that the viewpoint C varies for each of the input frames 20, the amount of time-series information increases, but by using each of the input frames 20 obtained in this way (hereinafter referred to as a "varied input frame") for estimation, a higher quality estimated frame 24 may be obtained.

Conversely, when the varied input frame (or a scaled image thereof) is input directly into the machine learning model 200, the effect of the variation in viewpoint C described above may result in a decrease in the accuracy of estimation.

Therefore, as described above, in the image processing system 1, based on the variation information and each pixel of each of the input frames 20, pixel values at positions in the input frame 20 corresponding to each pixel before variation are found by interpolation, and each intermediate frame 22 is generated and input into the machine learning model 200. This corrects the effect of variations in the viewpoint C, thereby preventing decrease in the accuracy of estimation.

### [Machine Learning Model]

The machine learning model 200 is a model that estimates an nth estimated frame 24_n based on the nth intermediate frame 22_n. Specifically, the machine learning model 200 is a model that estimates the nth estimated frame 24_n based on the nth intermediate frame 22_n and the n-1th auxiliary information 28_n-1. The machine learning model 200 functions as a part of the image processing system 1 inspection, and also functions as a part of the system 2. In either case, the machine learning model 200 is the same, but when the machine learning model 200 functions as a part of the inspection system 2, an nth estimated frame having a number of estimated pixels equal to or greater than the number of input pixels, based on the first to n-1th input frames 20 and attached information and the nth input frame 20_n and edited attached information, is output. Specifically, the machine learning model 200 is a convolutional neural network (CNN: convolutional neural network). Known models such as a multi-layered ResNet with a residual connection mechanism, a so-called encoder-decoder type U-Net, or the like may be used as the machine learning model 200. The model described in Non-Patent Document 1 may be used as the machine learning model 200.

The machine learning model 200 is a model trained using a plurality of training data sets, each of which includes a learning intermediate frame having a number of intermediate pixels generated based on a learning input frame having a number of input pixels, and a learning estimated frame having a number of estimated pixels. Various known techniques such as backpropagation may be used to train the machine learning model 200.

Specifically, the machine learning model 200 includes the cumulative feature information output layer 202, the estimated frame output layer 204, and a convolution layer 206 (see FIG. 2).

The cumulative feature information output layer 202 receives the nth intermediate frame 22_n and the n-1th auxiliary information 28_n-1 based on the n-1th cumulative feature information 26_n-1 indicating the features of the first to n-1th intermediate frames 22 and outputs the nth cumulative feature information 26_n indicating the features of the first to nth intermediate frames 22_n. The cumulative feature information output layer 202 may be composed of, for example, one or more convolution layers. The cumulative feature information 26_n-1 is image information (bitmap format information) having the same number of pixels as the number of intermediate pixels. The cumulative feature information 26_n-1 may also be considered a feature map that indicates the features of the first to n-1th intermediate frames 22.

The cumulative feature information output layer 202 receives a first intermediate frame 22_1 and given auxiliary information, and outputs first cumulative feature information 26_1. When n = 1, as there is no previous cumulative feature information 26 or auxiliary information 28, given auxiliary information prepared in advance is input to the cumulative feature information output layer 202 together with the first intermediate frame 22_1.

The estimated frame output layer 204 receives the nth cumulative feature information 26_n and outputs the nth estimated frame 24_n. Similarly to the cumulative feature information output layer 202, the estimated frame output layer 204 may be composed of one or more convolution layers, for example. Alternatively, the estimated frame output layer 204 may be composed of one or more transposed convolution layers (deconvolution layers).

The convolution layer 206 is a layer that reduces the number of channels of the cumulative feature information 26 while maintaining the number of pixels. The cumulative feature information 26 output from the convolution layer 206 is used in processing in the auxiliary information acquisition 322. The dimensions of the cumulative feature information 26 may be reduced at convolution layer 206, thereby reducing computational costs. The convolution layer 206 is, for example, but is not limited to, a convolution layer having a kernel size of 1×1.

### [Machine Learning Model Memory]

The machine learning model memory 312 stores the machine learning model 200. Specifically, the machine learning model memory 312 stores parameters (such as the number of convolutional layers, the number of nodes used in each convolutional layer, and the weight of each node) of the machine learning model 200.

### [Estimated Frame Acquisition]

The estimated frame acquisition 314 inputs each intermediate frame 22 to the machine learning model 200 and acquires first to Nth estimated frames 24, each having a number of estimated pixels greater than the number of input pixels and equal to or greater than the number of intermediate pixels. In the present embodiment, the estimated frame 24 has the same number of estimated pixels as the number of intermediate pixels. More specifically, the estimated frame acquisition 314 inputs the nth intermediate frame 22_n and the n-1th auxiliary information 28_n-1 to the machine learning model 200 and acquires the nth estimated frame 24_n.

### [Motion Information Acquisition]

The motion information acquisition 316 acquires nth motion information, which is information indicating an amount and direction of motion from the n-1th input frame 20_n-1 to the nth input frame 20_n. Specifically, for example, the nth motion information is motion information included in the attached information attached to the nth input frame. The nth motion information is information having the same number of pixels as the number of intermediate pixels. The motion information is image information indicating (bitmap format information) an amount and direction of motion of each pixel between the n-1th input frame 20_n-1 and the nth input frame 20_n. The motion information is also called a motion vector (motion vector). Specifically, the motion information acquisition 316 acquires motion information having the same number of pixels as the number of input pixels, and executes scaling and interpolation processing on the motion information to acquire motion information having the same number of pixels as the number of intermediate pixels. Hereinafter, motion information having the same number of pixels as the number of input pixels is also referred to as original motion information.

### [Depth Information Acquisition]

The depth information acquisition 318 acquires n-1th depth information indicating the depth of each pixel of the n-1th input frame 20_n-1, and nth depth information indicating the depth of each pixel of the nth input frame 20_n. Depth information is specifically image information having the same number of pixels as the number of intermediate pixels (bitmap format information). The depth information is also called a depth buffer or a Z buffer. Specifically, the depth information acquisition 318 acquires depth information having the same number of pixels as the number of input pixels, and then executes scaling and interpolation processing on the depth information to acquire depth information having the same number of pixels as the number of intermediate pixels. Hereinafter, depth information having the same number of pixels as the number of input pixels is also referred to as original depth information.

### [Emergent Pixel Identification]

Based on the n-1th depth information and the nth depth information, the emergent pixel identification 320 identifies an nth emergent pixel 222_n, which, among the pixels of the nth intermediate frame 22_n, is a pixel in which all or part of the game object O that is not displayed in an n-1th intermediate frame 22_n-1 is displayed (see FIG. 3). Specifically, the emergent pixel identification 320 identifies the nth emergent pixel 222_n based on the difference between the n-1th depth information and the nth depth information. In addition, the emergent pixel identification 320 may identify the nth emergent pixel 222_n based on an n-1th perspective projection matrix associated with the n-1th intermediate frame 22_n-1 and an nth perspective projection matrix associated with the nth intermediate frame 22_n. Furthermore, the emergent pixel identification 320 may identify the nth emergent pixel 222_n by using the n-1th motion information. More specifically, the emergent pixel identification 320 identifies the nth emergent pixel 222_n and generates nth emergent pixel information, which is image information indicating the position of the nth emergent pixel 222_n.

### [Auxiliary Information Acquisition]

The auxiliary information acquisition 322 acquires the n-1th auxiliary information 28_n-1 by applying motion compensation to the n-1th cumulative feature information 26_n-1 based on the n-1th motion information (excluding original motion information). Motion compensation refers to a process of moving a pixel at a position x in the n-1th cumulative feature information 26_n to a position x', for example, when a pixel at the position x in the n-1th intermediate frame 22_n-1 has moved to the position x' in the nth intermediate frame 22_n (see FIG. 3). That is, the auxiliary information acquisition 322 acquires the n-1th auxiliary information 28_n-1 based on the n-1th motion information by setting the pixel values of one or more pixels of the n-1th cumulative feature information 26_n-1 to pixels at positions moved according to the amount and direction of motion of the pixels.

When there is motion of the game object O between the nth input frame 20_n and the n-1th input frame 20_n-1, if the nth intermediate frame 22_n and the n-1th cumulative feature information 26_n-1 are input directly into the machine learning model 200 when acquiring the nth estimated frame 24_n, a ghost phenomenon may occur in which an afterimage of the game object O that was displayed in the nth intermediate frame 22_n is displayed in the output nth estimated frame 24_n.

Therefore, in the image processing system 1, as described above, motion compensation is applied to the n-1th cumulative feature information 26_n-1 based on the n-1th motion information to acquire the n-1th auxiliary information 28_n-1, and when acquiring the nth estimated frame 24_n, this n-1th auxiliary information 28_n-1 is input to the machine learning model 200. This makes it possible to suppress the above ghost phenomenon.

Furthermore, the auxiliary information acquisition 322 acquires the n-1th auxiliary information 28_n-1 by replacing the pixel value of the nth emergent pixel 222_n in the n-1th cumulative feature information 26_n-1 with a predetermined value. Specifically, the auxiliary information acquisition 322 acquires the n-1th auxiliary information 28_n-1 based on the nth emergent pixel information by replacing the pixel value of the nth emergent pixel 222_n in the n-1th cumulative feature information 26_n-1 with a predetermined value. The predetermined value may be a constant value such as 0 (black), or may be the pixel value of the nth emergent pixel 222_n in the nth intermediate frame 22_n.

When all or part of a game object O that is not displayed in the n-1th input frame 20_n-1 is displayed in the nth input frame 20_n, if the nth intermediate frame 22_n and the n-1th cumulative feature information 26_n-1 are input directly into the machine learning model 200 when acquiring the nth estimated frame 24_n, the above ghost phenomenon may occur in the output nth estimated frame 24_n.

Therefore, as described above, the image processing system 1 identifies the nth emergent pixel 222_n, which, among the pixels of the nth intermediate frame 22_n, is a pixel where all or part of the game object O that is not displayed in the n-1th intermediate frame 22_n-1 is displayed, and acquires the n-1th auxiliary information 28_n-1 by replacing the pixel value of the nth emergent pixel 222_n in the n-1th cumulative feature information 26_ n-1 with a predetermined value. This makes it possible to suppress the above ghost phenomenon.

### [Editor]

The editor 324 edits the nth attached information stored in the rendering information memory 304 according to user instructions. Specifically, for example, the editor 324 changes the value of the motion information attached to the nth input frame 20_n selected by the user to a value designated by the user. Here, the motion information to be changed is motion information having the same number of pixels as the number of input pixels (that is, the original motion information). The changed motion information value is stored in the rendering information memory 304 in association with other attached information of the nth input frame 20_n. The attached information edited according to user instructions is not limited to motion information, but may be variation information or depth information.

### [Attached Information Processor]

The attached information processor 326 generates a difference image between an image obtained by applying attached information to the n-1th input frame 20_n-1 based on the nth attached information and an image represented by the nth input frame 20_n. Specifically, for example, the attached information processor 326 generates a difference image between an image obtained by applying motion compensation to the n-1th input frame 20_n-1 based on the nth motion information and an image represented by the nth input frame 20_n.

### [Display]

The display 328 displays the nth estimated frame 24_n. Specifically, for example, the display 328 displays the nth estimated frame 24_n acquired by the estimated frame acquisition 314 inputting the nth intermediate frame 22_n and the n-1th auxiliary information 28_n-1 to the machine learning model 200. Furthermore, the display 328 displays the difference image generated by the attached information processor 326. Additionally, the display 328 displays the input frame 20 and each piece of attached information stored in the rendering information memory 304. The display 328 may display a part or all of the estimated frame 24, each piece of attached information, and the difference image selected by the user side by side.

### [4. Processing Executed at Image Processing System]

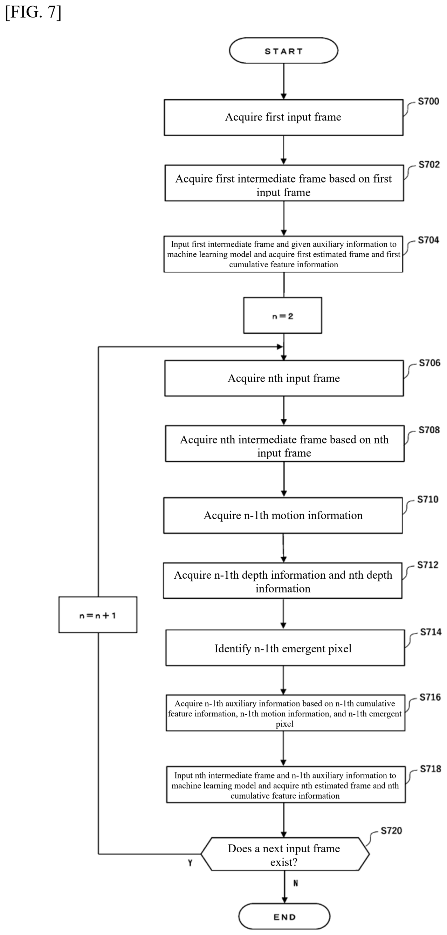

FIG. 7 is a flowchart illustrating one example of a processing flow executed at the image processing system 1. The process illustrated in FIG. 7 is executed by the controller 10 operating in accordance with a program stored in the memory 12.

### (1) Processing when n = 1

First, the controller 10 acquires a first input frame 20_1 (S700). The controller 10 acquires a first intermediate frame 22_1 based on the first input frame 20_1 (S702). Then, the controller 10 inputs the first intermediate frame 22_1 and given auxiliary information to the machine learning model 200, and acquires a first estimated frame 24_1 and first cumulative feature information 26_1 (S704).

### (2) Processing when n ≥ 2

The controller 10 acquires the nth input frame 20_n (S706). The controller 10 acquires the nth intermediate frame 22_n based on the nth input frame 20_n (S708).

Next, the controller 10 acquires the n-1th motion information (S710). In addition, the controller 10 acquires the n-1th depth information and the nth depth information (S712) and identifies the nth emergent pixel 222_n based on the n-1th depth information and the nth depth information (S714). The controller 10 acquires the n-1th auxiliary information 28_n-1 based on the n-1th cumulative feature information 26_n-1, the n-1th motion information, and the nth emergent pixel 222_n (S716). The controller 10 then inputs the nth intermediate frame 22_n and the n-1th auxiliary information 28_n-1 to the machine learning model 200 and acquires the nth estimated frame 24_n and the nth cumulative feature information 26_n (S718). The controller 10 determines whether the next frame exists (S720), and if determining that the next frame exists (S720: Y), increments n to n+1 and repeats the processes of S706 to S718. If the controller 10 determines that the next frame does not exist (S720: N), it ends this process. If the controller 10 determines that the next frame does not exist (S720: N), it may cause the display 18 to display the first to Nth estimated frames 24 directly.

### [5. Processing Executed at Inspection System]

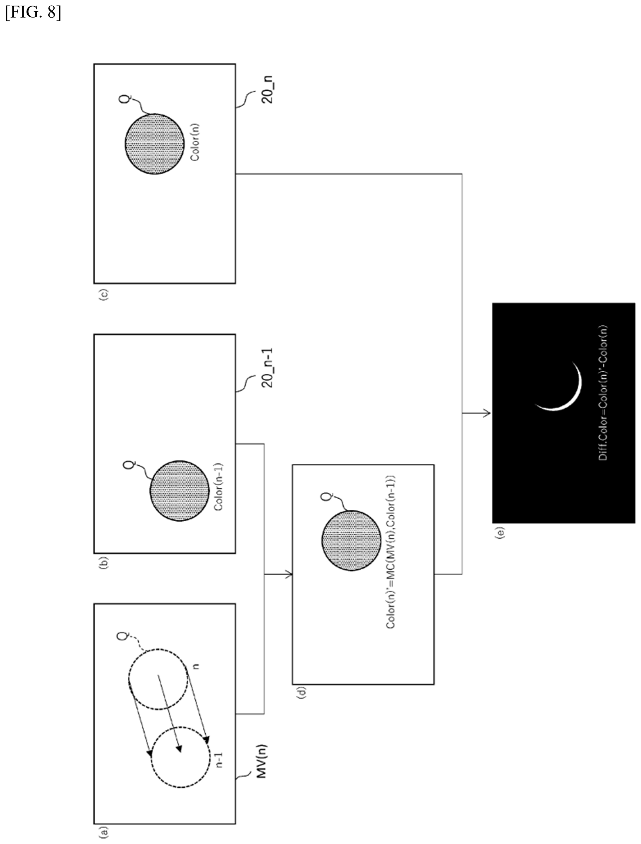

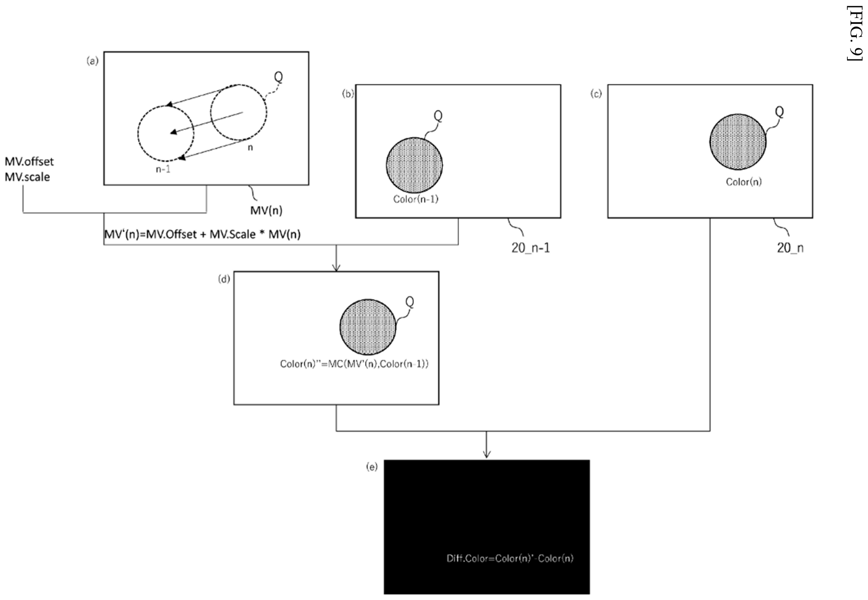

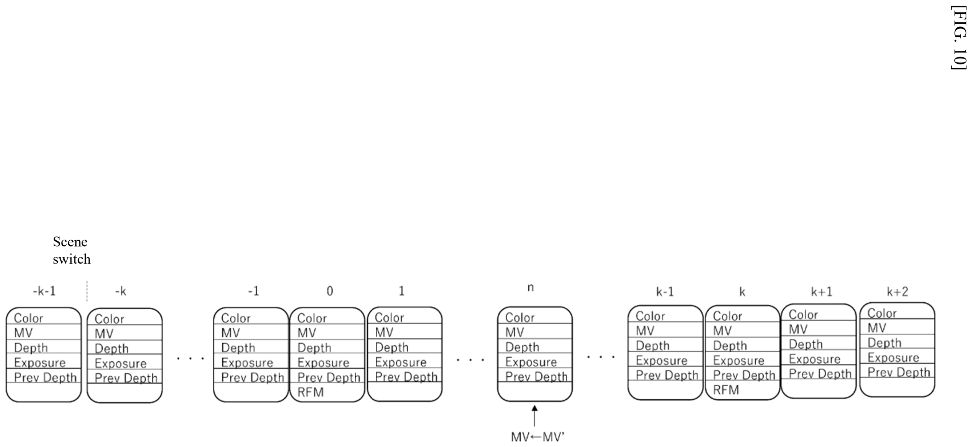

Referencing FIG. 8 to FIG. 10, a processing and inspection method executed at the inspection system 2 when the motion information is edited by an instruction of the user will be described as an example. The attached information edited in this process is the original motion information among the motion information. FIG. 8 and FIG. 9 illustrate the input frame 20 and the difference image that are changed by this processing. The process illustrated in FIG. 8 and FIG. 9 is executed by the controller 10 operating in accordance with a program stored in the memory 12. FIG. 10 illustrates information stored by the rendering information memory 304 for each frame. In FIG. 8 to FIG. 10, the input frame is represented as "Color," motion information (original motion information) is represented as "MV," depth information (original depth information) is represented as "Depth" and "Prev Depth," emergent pixel information is represented as "Exposure," and auxiliary information is represented as "RFM." Note that "Prev Depth" means depth information of one frame before "Depth." Moreover, each piece of information is denoted by adding (n) to indicate that it belongs to the nth frame.

(a) of FIG. 8 is a diagram illustrating the nth motion information, that is, a motion vector representing the amount and direction of motion of a game object Q from the n-1th input frame to the nth input frame. In the description of FIG. 8 to FIG. 10, for the sake of simplicity, the information for each frame will be described assuming that when viewed from a predetermined viewpoint, the only game object included is game object Q, and no other game object is included. As illustrated in (a) of FIG. 8, MV(n), which is the nth motion information, represents information on the motion of a spherical game object Q from the bottom left to the top right from the n-1th input frame to the nth input frame. The direction of the arrow is the direction from the game object in the nth input frame 20_n to the game object in the n-1th input frame 20_n-1.

(b) of FIG. 8 is a diagram illustrating the n-1th input frame 20_n-1, that is, color information Color(n-1). Furthermore, (c) of FIG. 8 is a diagram illustrating the nth input frame 20_n, that is, color information Color(n). Both (b) and (c) of FIG. 8 illustrate that the game object Q seen from a certain viewpoint is displayed at a predetermined position in the background. Furthermore, (b) of FIG. 8 is the input frame 20 one frame before (c), and the game object Q illustrated in (b) of FIG. 8 is located to the lower left of the game object Q illustrated in (c) in FIG. 8. (a) to (c) of FIG. 8 are all information generated by the renderer 302 and stored in the rendering information memory 304.

The attached information processor 326 generates an image obtained by applying motion compensation to the n-1th input frame 20_n based on the nth motion information. Specifically, for example, the attached information processor 326 generates an image obtained by applying motion compensation (MC (MV(n), Color(n-1))) to the input frame (Color(n-1)) illustrated in (b) of FIG. 8 using the motion information MV(n) illustrated in (a) of FIG. 8. Motion compensation here refers to a process of moving a pixel at a position x in the n-1th input frame 20_n-1 to a position x', when a pixel at the position x in the n-1th input frame 20_n-1 has moved to the position x' in the nth input frame 20_n. The nth motion information is image information indicating the amount and direction of motion of each pixel between the n-1th input frame 20_n-1 and the nth input frame 20_n. Therefore, the attached information processor 326 generates color information (Color(n)') illustrated in (d) of FIG. 8 by setting each pixel value of the game object Q illustrated in (b) of FIG. 8 to a pixel at a position moved to in accordance with the amount and direction of motion of the pixel, based on the motion information MV(n) in (a) of FIG. 8. In addition, the attached information processor 326 also performs processing on pixels representing a background of the input frame 20_n-1 illustrated in (b) of FIG. 8, but since the pixels representing the background have no motion information value (value 0), they do not change with the above processing.

Moreover, the attached information processor 326 generates a difference image between the image obtained by applying the motion compensation and the image represented by the nth input frame 20_n. Specifically, for example, a difference image (Diff.Color = Color(n)' - Color(n)) between the color information (Color(n)') obtained by applying the motion compensation illustrated in (d) of FIG. 8 and the input frame (Color(n)) illustrated in (c) of FIG. 8. (e) of FIG. 8 is a diagram illustrating the generated difference image. As illustrated in (e) of FIG. 8, a crescent-shaped pattern is illustrated in an area where game object Q is illustrated in the nth input frame. In other words, it can be seen that there is a discrepancy between the nth input frame 20_n estimated from the nth motion information and the n-1th input frame 20_n-1 and the nth input frame 20_n acquired from the renderer. The user may easily determine whether the attached information is accurate by having each piece of information illustrated in (a) to (e) of FIG. 8 displayed on the display 328 as a visible image.

Next, editing of the attached information will be described. (a) to (c) of FIG. 9 are each the same as (a) to (c) of FIG. 8. The editor 324 edits the nth motion information MV(n) stored in the rendering information memory 304 according to user instructions. Specifically, as information for editing the nth motion information illustrated in (a) of FIG. 9, the user operates the operation 16 to input a shift amount of the starting position in the x direction and y direction (MV.Offset) and a scaling rate in the x direction and y direction (MV.Scale). The editor 324 acquires the edited nth motion information MV'(n) based on the input shift amount and scaling rate. For example, the motion information MV'(n) is calculated by the formula MV'(n) = MV.Offset + MV.Scale*MV(n).

The attached information processor 326 generates an image obtained by applying motion compensation to the n-1th input frame based on the nth motion information. Here, as described above, the nth motion information is changed from MV(n) to MV'(n). Thus, the attached information processor 326 generates an image obtained by applying motion compensation (MC (MV'(n), Color(n-1))) to the input frame (Color(n-1)) illustrated in (b) of FIG. 9 using the edited motion information MV'(n). (d) of FIG. 9 is a diagram illustrating the generated color information (Color(n)").

Moreover, the attached information processor 326 generates a difference image between the image obtained by applying the motion compensation and the image represented by the nth input frame 20_n. Specifically, for example, a difference image (Diff.Color = Color(n)"-Color(n)) between the color information (Color(n)") obtained by applying the motion compensation illustrated in (d) of FIG. 9 and the input frame (Color(n)) illustrated in (c) of FIG. 9. (e) of FIG. 9 is a diagram illustrating the generated difference image. As illustrated in (e) of FIG. 9, the crescent-shaped pattern is not illustrated. In other words, it can be seen that there is approximate agreement between the nth input frame 20_n estimated from the edited motion information and the n-1th input frame 20_n-1 and the nth input frame 20_n acquired from the renderer 302. The user may easily acquire MV'(n), which is the motion information that should have been generated by the renderer 302.

As described above, the auxiliary information is information that reflects a plurality of past input frames 20 and attached information. On the other hand, in a game, as images may change significantly depending on the scene, the auxiliary information 28 spanning a scene change only has a small amount of information. Therefore, it is desirable that the inspection method according to the present disclosure be carried out within the same scene.

FIG. 10 illustrates information stored by the rendering information memory 304 for each frame. The symbols above the information for each frame represent the order of the frames. It is assumed that a scene switch occurs between the -k-1th (k is a constant) input frame 20 and the -kth input frame 20. In this case, the above inspection method is preferably performed after a certain number of frames have elapsed since the scene switch so that the auxiliary information contains sufficient information about past frames. In FIG. 10, the 0th auxiliary information (RFM) 28 is stored in the rendering information memory 304. The 0th auxiliary information 28 is information that reflects -kth to -1th input frames 20 and attached information.

Since the 0th auxiliary information 28 is stored in the rendering information memory 304, the machine learning model 200 may output high-quality images that contain sufficient information from past frames for each frame unless there is a subsequent scene switch.

The user carries out the above inspection method from the first frame onwards. For example, as illustrated in FIG. 10, MV, which is the nth attached information, is changed to MV'. As a result, a difference image such as that illustrated in FIG. 9 is displayed.

In the example illustrated in FIG. 10, for every frame, the input frame, motion information, depth information, emergent pixel information, and original depth information are stored. By storing this information for each frame, the user may identify the frame for which incorrect attached information was generated by the renderer. On the other hand, the auxiliary information 28 only needs to include sufficient information about past frames, and is rarely subject to editing. Therefore, the auxiliary information 28 is stored only in predetermined frames. The auxiliary information 28 may be stored every certain number of frames (for example, every 32 frames). Furthermore, there is no problem even when the auxiliary information 28 is stored for each frame.

In the above description, a case where motion information among the attached information is edited has been described, but other information may be edited as long as it is information stored in the rendering information memory 304.

### [6. Summary]

According to the image processing system 1 of the present embodiment described above, the nth estimated frame 24_n is estimated using the n-1th cumulative feature information 26_n-1 that indicates the features of the first to n-1th intermediate frames 22. Furthermore, according to the inspection system 2 of the present embodiment, when estimating high-quality moving images using the image processing system 1, it is possible to easily determine whether the information contained in each frame of the original low-quality moving images is accurate.

The invention according to the present disclosure is not limited to the above-described embodiment. Furthermore, the specific character strings and numerical values described above and the specific character strings and numerical values in the drawings are examples, and the present invention is not limited to these character strings and numerical values.

For example, in the present embodiment, an example has been given in which the number of intermediate pixels is greater than the number of input pixels and the number of intermediate pixels is the same as the number of estimated pixels, but the number of intermediate pixels may be the same as the number of input pixels and the number of estimated pixels may be greater than the number of intermediate pixels. That is, the intermediate frame 22 need not necessarily be a scaled version of the input frame 20.

### [7. Addendum]

(1) A game program inspection system including
   a processor,
   a memory that stores instructions to be executed by the processor and a machine learning model trained using a plurality of training data sets, and
   a display, wherein
   the memory stores first to Nth (N is a natural number greater than or equal to 2) input frames each having a predetermined number of input pixels, along with attached information for each of the input frames,
   the processor edits nth (n = 2, 3, ..., N) attached information stored in the memory according to user instructions,
   the machine learning model outputs an nth estimated frame having a number of estimated pixels greater than or equal to the number of input pixels, based on first to n-1th input frames and the attached information, and an nth input frame and edited attached information, and
   the display displays the nth estimated frame.
(2) The inspection system according to (1), wherein the processor
   based on each of the input frames, acquires respective first to Nth intermediate frames by generating an intermediate frame corresponding to the input frame and having a number of intermediate pixels greater than or equal to the number of input pixels, and
   inputs each of the intermediate frames into the machine learning model and acquires first to Nth estimated frames each having a number of estimated pixels greater than the number of input pixels and equal to or greater than the number of intermediate pixels,
   the machine learning model includes
   a cumulative feature information output layer that receives an nth intermediate frame and n-1th auxiliary information based on n-1th cumulative feature information that indicates features of first to n-1th intermediate frames, and outputs nth cumulative feature information that indicates features of the first to nth input frames and
   an estimated frame output layer that receives the nth cumulative feature information and outputs an nth estimated frame and
   the machine learning model is trained using a plurality of training data sets, each of which includes a learning intermediate frame having the number of intermediate pixels generated based on a learning input frame having the number of input pixels and a learning estimated frame having the number of estimated pixels.
(3) The inspection system according to (2), wherein
   the attached information includes nth motion information, which is information indicating an amount and a direction of motion from the n-1th input frame to the nth input frame and
   the processor acquires nth auxiliary information by applying motion compensation to the n-1th cumulative feature information based on the nth motion information.
(4) The inspection system according to (3), wherein
   the processor generates a difference image between an image obtained by applying the motion compensation to the n-1th input frame based on the nth motion information and an image represented by the nth input frame, and
   the display displays the difference image.
(5) The inspection system according to (2), wherein each of the input frames is an image obtained by executing rendering of three-dimensional data depicting one or more objects as seen from a predetermined viewpoint.
(6) The inspection system according to (5), wherein
   the attached information includes nth depth information indicating a depth of each pixel of the nth input frame, and
   the processor
   identifies an nth emergent pixel, which is a pixel among the nth intermediate frames in which all or part of an object not displayed in the n-1th intermediate frame is displayed, based on n-1th depth information and the nth depth information and
   acquires the n-1th auxiliary information by replacing a pixel value of the nth emergent pixel in the n-1th cumulative feature information with a predetermined value.
(7) The inspection system according to (6), wherein
   each of the input frames is an image obtained by executing rendering so that the viewpoint varies for each of the input frames, and
   the processor acquires variation information, which is information relating to variation of the viewpoint for each of the input frames in the rendering, and generates each of the intermediate frames found by interpolating a pixel value of a position corresponding to each pixel before variation in the input frame based on the variation information and each pixel of each of the input frames.
(8) The game program inspection system according to (2), wherein the cumulative feature information output layer receives the first intermediate frame and given auxiliary information and outputs first cumulative feature information.
(9) The inspection system according to (2), wherein the cumulative feature information is image information having the same number of pixels as the number of intermediate pixels.
(10) An inspection method, wherein
   a memory stores first to Nth (N is a natural number equal to or greater than 2) input frames having a predetermined number of input pixels, and attached information of each of the input frames,
   a processor edits nth (n = 2, 3, ..., N) attached information stored in the memory according to user instructions,
   a machine learning model trained using a plurality of training data sets outputs an nth estimated frame having a number of estimated pixels greater than or equal to the number of input pixels, based on first to n-1th input frames and the attached information, and an nth input frame and edited attached information, and
   the display displays the nth estimated frame.
(11) An inspection program for causing a computer to function as
   memory for storing first to Nth (N is a natural number greater than or equal to 2) input frames each having a predetermined number of input pixels, along with attached information for each of the input frames,
   editor for editing nth (n = 2, 3, ..., N) attached information stored in the memory according to user instructions,
   output for outputting an nth estimated frame having a number of estimated pixels greater than or equal to the number of input pixels based on first to n-1th input frames and the attached information and an nth input frame and edited attached information by a machine learning model trained using a plurality of training data sets, and
   display for displaying the nth estimated frame.

## Claims

1. A game program inspection system comprising:
a processor;
a memory that stores instructions to be executed by the processor and a machine learning model trained using a plurality of training data sets; and
a display, wherein:
the memory stores first to Nth (N is a natural number greater than or equal to 2) input frames each having a predetermined number of input pixels, along with attached information for each of the input frames;
the processor edits nth (n = 2, 3, ..., N) attached information stored in the memory according to user instructions;
the machine learning model outputs an nth estimated frame having a number of estimated pixels greater than or equal to the number of input pixels, based on first to n-1th input frames and attached information, and an nth input frame and edited attached information; and
the display displays the nth estimated frame.

2. The inspection system according to claim 1, wherein:
the processor:
based on each of the input frames, acquires respective first to Nth intermediate frames by generating an intermediate frame corresponding to the input frame and having a number of intermediate pixels greater than or equal to the number of input pixels; and
inputs each of the intermediate frames into the machine learning model and acquires first to Nth estimated frames each having a number of estimated pixels greater than the number of input pixels and equal to or greater than the number of intermediate pixels,
the machine learning model comprises:
a cumulative feature information output layer that receives an nth intermediate frame and n-1th auxiliary information based on n-1th cumulative feature information that indicates features of first to n-1th intermediate frames, and outputs nth cumulative feature information that indicates features of the first to nth input frames; and
an estimated frame output layer that receives the nth cumulative feature information and outputs an nth estimated frame; and
the machine learning model is trained using a plurality of training data sets, each of which comprises a learning intermediate frame having the number of intermediate pixels generated based on a learning input frame having the number of input pixels and a learning estimated frame having the number of estimated pixels.

3. The inspection system according to claim 2, wherein:
the attached information comprises nth motion information, which is information indicating an amount and a direction of motion from the n-1th input frame to the nth input frame; and
the processor acquires nth auxiliary information by applying motion compensation to the n-1th cumulative feature information based on the nth motion information.

4. The inspection system according to claim 3, wherein:
the processor generates a difference image between an image obtained by applying the motion compensation to the n-1th input frame based on the nth motion information and an image represented by the nth input frame; and
the display displays the difference image.

5. The inspection system according to claim 2, wherein each of the input frames is an image obtained by executing rendering of three-dimensional data depicting one or more objects as seen from a predetermined viewpoint.

6. The inspection system according to claim 5, wherein:
the attached information comprises nth depth information indicating a depth of each pixel of the nth input frame; and
the processor:
identifies an nth emergent pixel, which is a pixel among the nth intermediate frames in which all or part of an object not displayed in the n-1th intermediate frame is displayed, based on n-1th depth information and the nth depth information; and
acquires the n-1th auxiliary information by replacing a pixel value of the nth emergent pixel in the n-1th cumulative feature information with a predetermined value.

7. The inspection system according to claim 6, wherein:
each of the input frames is an image obtained by executing rendering so that the viewpoint varies for each of the input frames; and
the processor acquires variation information, which is information relating to variation of the viewpoint for each of the input frames in the rendering, and generates each of the intermediate frames found by interpolating a pixel value of a position corresponding to each pixel before variation in the input frame based on the variation information and each pixel of each of the input frames.

8. The game program inspection system according to claim 2, wherein the cumulative feature information output layer receives the first intermediate frame and given auxiliary information and outputs first cumulative feature information.

9. The inspection system according to claim 2, wherein the cumulative feature information is image information having the same number of pixels as the number of intermediate pixels.

10. An inspection method, wherein:
a memory stores first to Nth (N is a natural number equal to or greater than 2) input frames having a predetermined number of input pixels, and attached information of each of the input frames;
a processor edits nth (n = 2, 3, ..., N) attached information stored in the memory according to user instructions;
a machine learning model trained using a plurality of training data sets outputs an nth estimated frame having a number of estimated pixels greater than or equal to the number of input pixels, based on first to n-1th input frames and the attached information, and an nth input frame and edited attached information; and
the display displays the nth estimated frame.

11. An inspection program for causing a computer to function as:
memory for storing first to Nth (N is a natural number greater than or equal to 2) input frames each having a predetermined number of input pixels, along with attached information for each of the input frames;
editor for editing nth (n = 2, 3, ..., N) attached information stored in the memory according to user instructions;
output for outputting an nth estimated frame having a number of estimated pixels greater than or equal to the number of input pixels based on first to n-1th input frames and the attached information and an nth input frame and edited attached information by a machine learning model trained using a plurality of training data sets; and
display for displaying the nth estimated frame.
